Europäisches Patentamt

European Patent Office

Office européen des brevets

(11) Publication number: **0 282 459**
A2

(12) **EUROPEAN PATENT APPLICATION**

(21) Application number: **88830054.8**

(22) Date of filing: **12.02.88**

(51) Int. Cl.⁴: **B 65 G 13/12**
F 27 B 9/20

(30) Priority: **10.03.87 IT 4002487**

(43) Date of publication of application:
**14.09.88 Bulletin 88/37**

(84) Designated Contracting States:
**BE DE ES FR GB LU NL**

(71) Applicant: **POPPI S.p.A.**
**Via Radici Nord, 134**
**I-42014 Castellarano (Reggio Emilia) (IT)**

(72) Inventor: **Cavani, Gianfranco**
**Via Allegri, 17**
**I-41043 Formigine (Modena) (IT)**

(74) Representative: **Lanzoni, Luciano**
**c/o BUGNION S.p.A. Viale Trento Trieste, 25**
**I-41100 Modena (IT)**

(54) **A conveyor for the transfer along a transportation line of objects exhibiting a rolling surface, in particular, for conveying cylindrical objects through a continuous line.**

㊗ The conveyor, which is designed to transfer rolling objects along a production line, and in particular, to convey cylindrical items (3) through a continuous kiln, comprises two roller tables (1, 2) the rollers (11, 12) of which are arranged in alternation, those of the one table with those of the other, parallel throughout. The two tables (1, 2) are vertically mobile, one in relation to the other, and support the conveyed objects by turns; reciprocating ascent and descent of the one table (1) in relation to the other table (2) is coordinated with the rotation of their rollers (11, 12), which revolve in the same direction but at dissimilar speeds, in such a way that a difference in surface speed favouring the rollers of one table during ascent is inverted to favour those of the other table during subsequent descent.

**Fig. 1**

**Description**

A conveyor for the transfer along a transportation line of objects exhibiting a rolling surface, in particular, for conveying cylindrical objects through a continuous kiln.

The invention relates to a conveyor for the transfer along a transportation line of objects that exhibit at least one rolling surface, and in particular, for conveying cylindrical objects through a continuous kiln.

The invention is intended specifically, though by no means exclusively, as a conveyor system for tubular or solid cylindrical objects, ceramic materials for the most part, that need to undergo a given heat treatment, and must be taken through the different treatment zones rotating continually about their own axes.

The prior art embraces systems of a type consisting substantially in a plurality of horizontal conveyor rollers that are disposed parallel one with the next and spaced apart at regular distance, in such a way that a cylindrical object can be carried by any two adjacent rollers, resting on two given straight line generators of its outermost cylindrical surface. The cylindrical object is caused to rotate about its own axis by friction transmitted from the two rollers on which it rests, which are power driven in the same direction of rotation and at the same surface speed. Whilst a system such as this is capable of keeping cylindrical objects continuously in rotation about their axes, it does not permit of traversing them in a direction perpendicular to their axes.

Systems do in fact exist that are able to effect a traverse movement perpendicular to the axis of the cylindrical object, but these are embodiments where the entire roller table and the cylindrical objects it supports are traversed, bodily. Movement in the prescribed direction is obtained by virtue of the fact that the power driven rollers are mounted to belt or chain loops tensioned around two wheels or sprockets; the roller table is therefore constructed in stretches, or branches, by which the cylindrical objects, resting on the rollers, are moved along the line at a rate of travel which remains independent of their rolling speed.

Embodiments of this type are somewhat complicated, and do not readily lend themselves to adoption in tunnel kilns, internally of which considerably high temperatures are reached. This is especially true in the case of pipes fashioned from ceramic material; such material must be fired at high temperature, of the order of 1150 °C in the instance, for example, of vitreous products.

Accordingly, the object of the invention is that of overcoming the limitations and shortcomings of prior art conveyor systems as mentioned above.

The stated object is fully achieved with a conveyor according to the invention, which serves to transfer objects that exhibit a rolling surface, along a transportation line, and in particular, to transfer cylindrical objects through a continuous kiln; such a conveyor is characterized in that it comprises a first horizontal roller table, consisting in a plurality of identical power driven rollers disposed parallel and spaced apart at equal distance one from the next, which revolve in the same direction, and at the same surface speed; and a second horizontal roller table, likewise consisting in a plurality of identical power driven rollers disposed parallel and spaced apart at equal distance one from the next, which revolve in the same direction and at the same surface speed; in that the rollers of the two tables revolve in the same direction and are parallel with each other, interspaced in alternation in such a way that any one roller of the first table lies with its axis in the vertical plane lying parallel with and half-way between two adjacent rollers of the second table; in that the two roller tables are capable of vertical movement one in relation to the other, in such a way that support of the conveyed revolving objects can be alternated between the two sets of rollers according to the relative position of the tables; in that such relative movement is cyclic, and produced by a combination of alternated relative vertical traverses effected by the two roller tables comprising: an upward movement whereby the rollers of the second table shift from an initial lowered position to a raised position, entering into contact with the objects supported in rotation by the first table and raising them to a level above the relative rollers, and a downward movement whereby the self-same rollers of the second table are returned to the initial position and the objects come to rest on the rollers of the first table; in that ascending and descending movement of the second roller table is coordinated with the rotation of the rollers in such a way that the surface speeds of the rollers of the second table and the first table are dissimilar, at least at the moment in which the rollers of the second table, during the ascending movement, and of the first table, during the descending movement, enter into contact with the objects supported by the first table, and by the second table, respectively; and in that the dissimilarity in surface speeds of the rollers of the second table and the rollers of the first table consists in a relative difference the positive or negative value of which during the ascending movement is inverted subsequently during the descending movement.

The invention is further characterized by a marked simplicity both from the functional standpoint, and in terms of options available for its embodiment.

The invention will now be described in detail, by way of example, with the aid of the accompanying drawings, in which:

fig 1 is a schematic representation of the conveyor, viewed from the side in vertical elevation;

figs 2...7, a series of side elevations identical to that of fig 1, show the invention in a succession of different operating positions.

With reference to the drawings, 1 denotes a first horizontal roller table, in its entirety, consisting in a plurality of identical power driven rollers 11 that are disposed parallel and equidistant one in relation to the next, and made to revolve in the same direction, indicated by the arrow denoted 21, at the same surface speed. Similarly, 2 denotes a second horizontal roller table, in its entirety, likewise consisting in a plurality of identical power driven rollers 12 that are disposed parallel and equidistant one from the next, and revolve at identical surface speed in the direction indicated by the arrow denoted 22.

The rollers 11 of the first table rotate in the same direction as the rollers 12 of the second table; moreover, the rollers 11 and 12 of the two tables are disposed parallel with one another, and arranged in alternation, in such a way that any one roller 11 of the first table will be found to have its axis in a vertical plane that lies parallel with the axes of the other rollers, and positioned exactly half-way between the axes of two successive rollers 12 of the second table 2. The conveyor is embodied such as to permit relative vertical movement between the two tables 1 and 2, so that these function alternately, according to their relative positions at any given moment, as the transport medium by which cylindrical objects 3 (pipes, for example) are supported, and transferred in a direction at right angles to the axes of the single rollers.

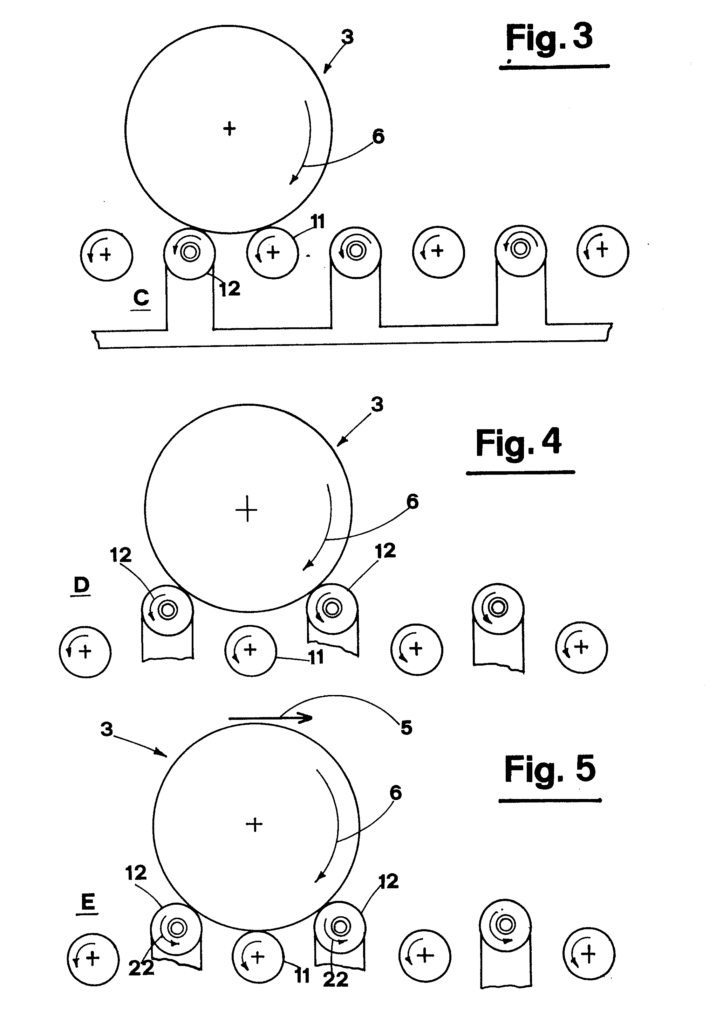

In the embodiment illustrated, in particular, the rollers 11 of the first table 1 are fixed, and form a conventional roller conveyor of the type adopted in tunnel kilns used for firing ceramic materials. The rollers 11 themselves are driven by a chain or gear transmission located outside the kiln, in such a way that all revolve in the same direction, at the same surface speed. The second table 2, on the other hand, is capable of being traversed bodily through a vertical path, reciprocating between two given limit positions denoted A and D. More exactly, the single rollers 12 are mounted to a movable frame 4 that is reciprocated through a vertical plane by the agency of conventional means (not shown in the drawings). This alternated vertical traversing motion, in the case of the example illustrated, where the second table 2 moves in relation to the first table 1, consists in the ascent of the second table from the lowered position A to the raised position D, and its descent from the raised D to the lowered position A. When in the lowered position A, the rollers 12 of the second table lie low enough to avoid any contact with the objects 3 resting on the rollers 11 of the first table above. Similarly, with the second table in the raised position D (fig 4), the objects 3 rest exclusively on the rollers denoted 12, the rollers denoted 11 remaining beneath.

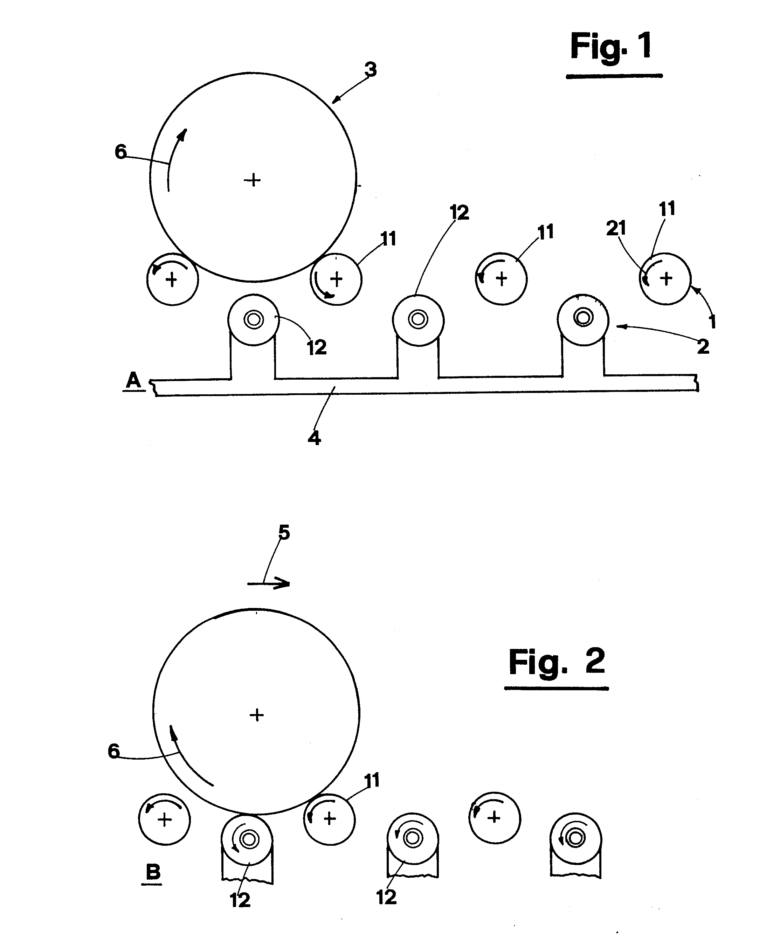

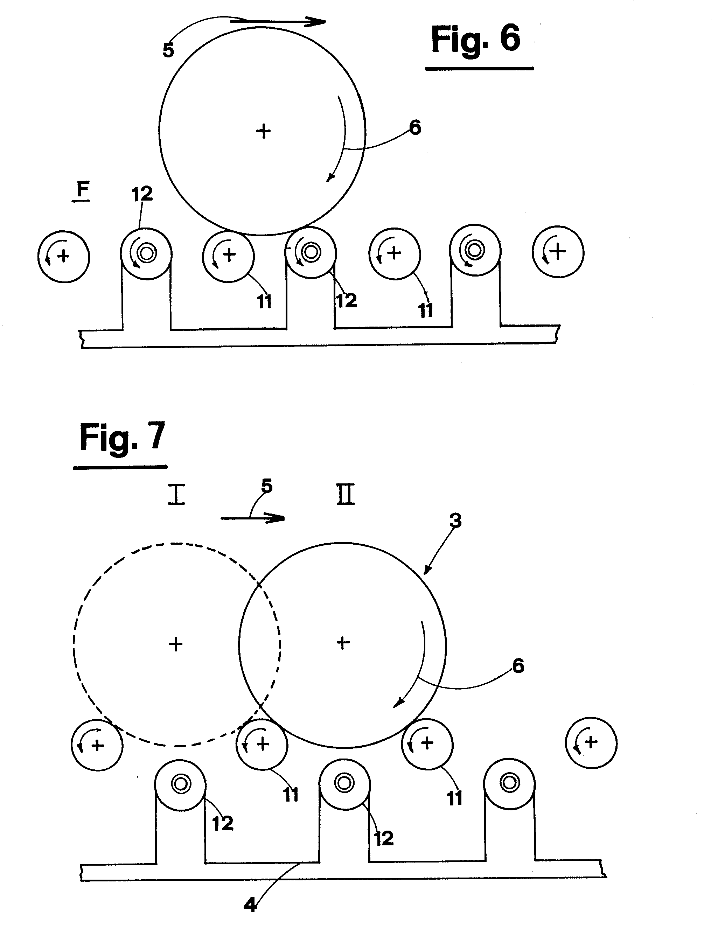

The rollers 11 of the first table are kept revolving at a constant surface speed throughout operation. The surface speed of the rollers 12 of the second table 2 is not constant, but varies with ascent and descent of the table between the two limit positions A and B. More exactly, the speed of the rollers 12 is coordinated with their vertical traverse in such a way as to occasion differences between the speeds of the two sets of rollers 12 and 11 that will be of opposite value during ascent and descent, i.e. plus and minus, or minus and plus, respectively. In the embodiment shown in the drawings, the rollers 12 of the second table turn slower than the rollers 11 of the first table, at least up until the moment when these same rollers 12 enter into contact with the objects 3 above; this ensures that, as the single roller 12 ascends, the object 3 with which it enters into contact will be lifted and shift forward in the direction of the arrow denoted 5 (fig 2), the result being that it assumes a new position, resting on the ascending roller 12 and the roller 11 immediately to its right, as viewed in the drawings, and remains supported in this fashion for a brief space (fig 3) while the ascending roller 12 continues its upward course. On arrival of the ascending roller 12 at the raised position D, the cylindrical object 3 will be lifted clear of the first roller table 1 and borne up by two adjacent rollers 12 of the second table 2. Before the second table 2 begins its descent, the surface speed of its rollers 12, formerly less, it will be remembered, than that of the rollers 11 above (at least, up until making contact with the conveyed object 3), is increased gradually to the point where it outstrips that of the same rollers 11 (now beneath). The purpose of such an expedient is to ensure that when the conveyed object 3 enters into contact with the roller 11 of the first table (position E, fig 5) during its descent from D toward A, the surface speed of this roller 11 will be less than that of the rollers 12 on which the object 3 began the descent; the result is that, following the moment of contact illustrated in fig 5, the object 3 shifts to the right in the direction of the arrow 5, away from its position on the two descending rollers 12 into a new position (denoted F, fig 6), resting on the right hand of the two descending rollers 12 and the fixed roller 11 lying between them. As the downward movement continues, the object 3 separates from the remaining roller 12 of the second table and shifts farther to the right, coming to rest on the roller 11 immediately adjacent thereto.

On completion of the ascent and descent cycle thus described, the cylindrical object 3 will be seen to have made a step forward in the direction of the arrow 5 from position I to position II, discernable in fig 7; moreover, the forward step is accomplished substantially as an independent maneouvre, that is, independently of the object's rotation about its own axis, denoted 6.

Movement of the object 3 along the transportation line is thus obtainable as a succession of discrete steps, each one equal to the distance that separates two successive rollers 11 of the first table 1.

During its progress forward, the object 3 is kept revolving about its own axis. Also, it will be noted that the speed at which objects 3 move along the conveyor in the direction indicated is substantially independent of the surface speed of the rollers 11 and 12, and that the direction of travel denoted by the arrow 5 can be reversed simply by inversion of the cycle that controls variations in the surface speed of the ascending and descending rollers 12. In other words, to obtain movement in the opposite direction to that of the arrow 5, it suffices simply to ensure that the rollers 12 rotate at a surface speed higher than that of the fixed rollers 11 when ascending (at least, at the moment of making contact with the object 3), and lower than that of the fixed rollers 11 when descending.

## Claims

1) A conveyor for the transfer along a transportation line of objects that exhibit a rolling surface, and in particular, for conveying cylindrical objects (3) through a continuous kiln, characterized
-in that it comprises a first horizontal roller table (1), consisting in a plurality of identical power driven rollers (11) disposed parallel and spaced apart at equal distance one from the next, which revolve in the same direction and at the same surface speed; and a second horizontal roller table (2), likewise consisting in a plurality of identical power driven rollers (12) disposed parallel and spaced apart at equal distance one from the next, which revolve in the same direction and at the same surface speed;
-in that the rollers (11, 12) of the two tables (1, 2) revolve in the same direction and are parallel with each other, interspaced in alternation in such a way that any one roller of the first (or second) table (1) lies with its axis in the vertical plane lying parallel with and halfway between two adjacent rollers of the second (or first) table (2);
-in that the two roller tables (1, 2) are capable of vertical movement one in relation to the other, in such a way that support of the conveyed revolving objects (3) can be alternated between the two sets of rollers according to the relative position of the tables;
-in that such relative movement is cyclic, produced by a combination of alternated relative vertical traverses effected by the two roller tables (1, 2) comprising: an upward movement whereby the rollers (12) of the second (or first) table (2) shift from an initial lowered position to a raised position, entering into contact with the objects (3) supported in rotation by the first (or second) table (1) and raising them to a level above the relative rollers (11), and a downward movement whereby the self-same rollers (12) of the second table (2) are returned to the initial position and the objects (3) come to rest on the rollers (11) of the first table (1);
-in that ascending and descending movement of the second (or first) roller table (2) is coordinated with the rotation of the rollers in such a way that the surface speeds of the rollers of the second table and the first table are dissimilar, at least at the moment in which the rollers of the second (or first) table (2), during the ascending movement, and of the first (or second) table (1), during the descending movement, enter into contact with the objects (3) supported by the first table (1) and by the second table (2), respectively;
-and in that the dissimilarity in surface speeds of the rollers (12) of the second table (2) and the rollers (11) of the first table (1) consists in a relative difference the positive or negative value of which during the ascending movement is inverted subsequently during the descending movement.

2) A conveyor as in claim 1, wherein the first roller table (1) occupies a fixed position, and the second roller table (2) is mounted to a movable frame (4) capable of accomplishing a reciprocated traversing movement in the vertical direction.

3) A conveyor as in claim 2, wherein the rollers (12) of the second table (2) are made to rotate in the same direction as that of the rollers (11) of the first table (1) by the agency of means that are designed to vary the surface speed of the rollers (12) of the second table (2) in coordination with their traversing movement in relation to the rollers (11) of the first table (1), the surface speed of which is maintained constant.

0282459

**Fig. 1**

**Fig. 2**

0282459

Fig. 3

Fig. 4

Fig. 5

0282459

**Fig. 6**

**Fig. 7**